# EUROPÄISCHE PATENTSCHRIFT

(11) **EP 1 642 058 B1**
(45) Veröffentlichungstag und Bekanntmachung des Hinweises auf die Patenterteilung: **14.11.2007**
(21) Anmeldenummer: 04740504.8
(22) Anmeldetag: 01.07.2004
(51) Int. Cl.: F16L 37/091, F16L 33/22

(54) **STECKKUPPLUNG**
PLUG-IN COUPLING
ACCOUPLEMENT ENFICHABLE

(30) Priorität: 04.07.2003 DE 10330408
(43) Veröffentlichungstag der Anmeldung: 05.04.2006
(73) Patentinhaber: Friatec Aktiengesellschaft, 68229 Mannheim (DE)
(72) Erfinder: BAVING, Hans-Jürgen, 68165 Mannheim (DE); MILNAZIK, Peer, 67061 Ludwigshafen (DE); SICHLER, Bernhard, 69517 Gorxhaimertal (DE); MANNWEILER, Gudrun, 68219 Mannheim (DE); KROPP, Michael, 68535 Edingen-Neckarhausen (DE); SCHIEDHERING, Lars, 69198 Schriesheim (DE)
(74) Vertreter: Schmitt, Meinrad
(86) Internationale Anmeldenummer: PCT/EP2004/007132
(87) Internationale Veröffentlichungsnummer: WO 2005/003614

(56) Entgegenhaltungen:
- EP-A- 1 178 255
- DE-A- 10 221 971
- DE-U- 8 536 760
- FR-A- 2 830 071
- US-A1- 2003 067 170

## Beschreibung

Die Erfindung bezieht sich auf eine Steckkupplung gemäß der im Oberbegriff des Patentanspruchs 1 angegebenen Merkmale.

Aus der EP-A-1 178 255 ist eine derartige Steckkupplung mit einem Hauptkörper bekannt, welcher zum vorderen Ende hin eine Erweiterung in Form einer Hülse aufweist. Innerhalb der Hülse sind axial nebeneinander ein Dichtelement, ein Aussteifring, ein Halteelement sowie ein mit der Hülse verbundenes Festhalteelement angeordnet, dessen axiale Stirnfläche im Wesentlichen in der gleichen Radialebene wie die axiale Stirnfläche der Hülse liegt. Ferner ist Innerhalb des Festhalteelements ein Entkopplungselement vorgesehen, an dessen Innenfläche ein in einen Ringspalt der Steckkupplung eingeschobenes Rohrende anliegt und welches derart verschiebbar ist, dass die Haltekrallen des Halteelements von der Außenfläche des Rohrendes bei Bedarf entkoppelbar sind. Aufgrund der koaxialen ineinander greifenden Anordnung des Entkopplungselements, des Festhalteelements und der Hülse weist diese einen vergleichsweise großen Außendurchmesser auf. Weiterhin können Fertigungstoleranzen der letztgenannten drei Bauteile sich in ungünstiger Weise derart aufaddieren, dass mittels des Entkopplungselements eine sichere radiale Abstützung des Rohrendes nach außen nicht gewährleistet werden kann, zumal zur Vermeidung eines zu hohen Einschubwiderstandes zu enge Fertigungstoleranzen nicht ohne Weiteres vorgegeben werden können. Ferner Ist aufgrund des Entkopplungselements zwischen dem Stützkörper des Festhalteelements und der Außenfläche des Rohrendes ein vergleichsweise großer Ringspalt vorhanden, so dass die frei liegenden Enden der Haltekrallen bei hohen Auszugskräften umgebogen und in unzulässiger Weise zu tief in die Rohraußenfläche eindringen können.

Des Weiteren ist aus der US-A-2003/006 7170 eine Steckkupplung mit einem aus Metall gefertigten Gehäuse bekannt, deren ein Dichtelement aufnehmende Hülse am vorderen offenen Ende einen erweiterten Bereich aufweist. Der erweiterte Bereich dient zur Aufnahme eines geschlossenen Ringteils eines Halteelements mit federelastischen Haltekrallen, wobei durch Umbiegen des freien Endes des erweiterten Bereichs ein Klemmteil zur Festlegung des genannten geschlossenen Ringteils gebildet ist. Bedarfsweise kann mittels des Klemmteils ferner eine L-förmige Scheibe festgeklemmt sein zur Abstutzung der Haltekrallen des Halteelements.

Ferner sind aus der DE-A-199 35 246 oder der DE-A-102 21 971 Steckkupplungen bekannt, welche einen Grundkörper, ein ringförmiges Dichtelement, ein Halteelement sowie eine mit dem Grundkörper verbindbare Hülse enthalten. Mittels des ringförmig ausgebildeten Halteelements, welches auch als Klemmring bezeichnet wird, ist ein in einen Ringspalt zwischen dem Grundkörper und der Hülse einsteckbares Rohrende in der Steckkupplung fixierbar, wobei das auf dem Grundkörper angeordnete ringförmige Dichtelement an der Innenfläche des eingesteckten Rohrendes dichtend anliegt. Das Halteelement ist im Wesentlichen in Richtung der Längsachse der Steckkupplung durch einen Spalt unterteilt und enthält wenigstens eine Kralle, welche radial in die Außenfläche des Rohrendes zur Fixierung desselben in der Steckkupplung eingreift. Insbesondere Infolge von Fertigungstoleranzen der Hülse und des In Längsrichtung geteilten Halteelements und ferner der Rohre können Schwierigkeiten hinsichtlich der funktionssicheren Fixierung des Rohrendes in der Steckkupplung auftreten. Des weiteren können Probleme aufgrund eines zu tiefen Eindringens der Kralle bzw. Krallen des Halteelements in die Rohraußenfläche auftreten, wobei bei Ausbildung des Rohres als ein Kunststoff-Metall-Verbundrohr mit einer Metall-Zwischenschicht, insbesondere aus Aluminium, eine nachteilige Beschädigung der Metall-Zwischerischicht auftreten kann.

Hiervon ausgehend liegt der Erfindung die Aufgabe zugrunde, die Steckkupplung der genannten Art dahingehend weiterzubilden, dass mit geringem Fertigungs- und Montageaufwand eine hohe Funktionssicherheit der Verbindung und Fixierung des Rohrendes in der Steckkupplung erreicht wird. Die Steckkupplung soll bei der Montage eine funktionsgerechete Handhabung ermöglichen, und die Gefahr von Montagefehlern soll ausgeschlossen werden. Die Steckkupplung soll für Rohre aus unterschiedlichen Werkstoffen, wie Kunststoff oder Metall oder einem Verbund derselben in Form von Verbundrohren gleichermaßen einsetzbar sein, wie für Rohre aus vergleichsweise weichen Werkstoffen oder Kunststoffen, wie insbesondere Polyäthylen. Die Steckkupplung soll problemlos zu fertigen sein, und über viele Jahre soll dauerhaft eine sichere Verbindung der Rohre mit der Steckkupplung gewährleistet werden. Des weiteren soll die Steckkupplung im Sanitärbereich, insbesondere für die Warmwasser- und Kaltwasserinstallation, zum Einsatz gelangen können. Hierbei sollen vor allem durch Temperaturänderungen des strömenden Mediums bedingte Materialveränderungen, insbesondere hinsichtlich der Dimension oder der Steifigkeit, der Rohre zuverlässig von der Steckkupplung aufgenommen werden können, wobei für eine lange Lebensdauer von Jahrzehnten eine funktionssichere Abdichtung und Verbindung gewährleistet werden soll.

Die Lösung dieser Aufgabe erfolgt gemäß der im Patentanspruch 1 angegebenen Merkmale.

Die erfindungsgemäße Steckkupplung zeichnet sich durch eine funktionssichere Konstruktion und einen geringen Fertigungs- und Montageaufwand aus. Der teilweise in das Innere des Rohrendes eingreifende Grundkörper gewährleistet eine sichere radiale Abstützung des Rohrendes, so dass auch unter wechselnden Betriebsbedingungen eine sichere Aufnahme und Übertragung der Haltekräfte mittels des Halteelements sowie eine sichere Abdichtung gewährleistet ist. Das Halteelement ist als ein über den Umfang geschlossener Ring ausgeführt, enthaltend radial außen einen über den Umfang geschlossenen Ringteil und radial innen um einen vorgegebenen Winkel zur Längsachse geneigt angeordnete Krallen, wobei der geschlossene Ringteil in der Hülse fixiert und in diese integriert ist. Die mit dem Grundkörper verbundene Hülse enthält zwei fest miteinander verbundene Hülsenteile, wobei der geschlossene Ringteil des Halteelements im Verbindungsbereich der beiden Hülsenteile definiert festgelegt ist. Die zungenartig ausgebildeten Krallen des Halteelements stehen im unbelasteten Zustand, in welchem das Rohrende nicht eingesteckt ist, unter einem vorgegebenen Winkel zur Längsachse der Steckkupplung, wobei der genannte Winkel sich in Richtung zum vorderen freien Hülsenende öffnet bzw. die genannten Haltekrallen mit ihren Kanten zur Längsachse geneigt in das Innere In Richtung zum zweiten hinteren Hülsenteil weisen.

In bevorzugter Weise ist den Krallen, nachfolgend Haltekrallen genannt, des Halteelements ein auf deren der Längsachse zugewandten Innenseite liegender Stützkörper zugeordnet. Der Stützkörper ist Insbesondere als ein zumindest näherungsweise konischer Ringbund des vorderen Hülsenteils ausgebildet. Alternativ kann der Stützkörper aus Segmenten, Nocken oder dergleichen ausgebildet sein. Mittels des Stützkörpers wird eine exakte Zentrierung des Halteelements bei Herstellung der Verbindung der beiden Hülsenteile sichergestellt. Bevorzugt wird mittels des Stützkörpers die Eindringtiefe der Haltekrallen in das Rohrende begrenzt, was vor allem bei Verbundrohren von besonderer Bedeutung ist. Die Geometrie der Hülse ist deart vorgegeben, dass sich der Innendurchmesser des Halteelements bzw. dessen Haltekrallen während des Einsteckens des Rohrendes um einen vorgegebenen Wert beispielsweise in der Größenordnung von 0,6 mm vergrößern kann, so dass die Haltekrallen mit Vorspannung auf der Außenfläche des Rohres bzw. dem Rohraußenmantel aufliegen, Im Falle einer Zugbelastung, also entgegen der Einsteckrichtung, dringen die Haltekrallen nur um einen vorgegebenen maximalen Wert außen in das eingesteckte Rohr ein. Infolge des erfindungsgemäßen Stützelementes und/oder des konischen Ringbundes ist die Eindringtiefe auf einen vorgegebenen Maximalwert, bevorzugt in der Größenordnung von 0,4 mm begrenzt.

Es sei hier angemerkt, dass bei einem Verbundrohr der Dimension 16 mm und bei einer gesamten Wanddicke des Rohres von 2 mm die äußere Kunststoffschicht, insbesondere Polyäthylenschicht, 0,5 mm dick ist. Bei größeren Rohrwanddicken, beispielsweise von Rohren der Dimensionen 20, 25, 32 und 40 mm, ist bekanntlich die Rohrwanddicke entsprechend größer und beträgt beispielsweise 0,6 mm. Erfindungsgemäß ist das Stützelement derart ausgebildet und/oder derart auf die Rohrwandstärke und insbesondere die äußere Schicht eines Verbundrohres abgestimmt, dass die maximale Eindringtiefe um einen vorgegebenen Wert kleiner ist als die äußere Schicht des Rohres, so dass ein Eindringen der Haltekrallen in die Metallschicht zuverlässig verhindert wird.

Die beiden insbesondere als Kunststoffspritzteile ausgebildeten Hülsenteile sind bevorzugt mittels Ultraschallschweißung miteinander fest und dauerhaft verbunden. Vor Durchführung der Schweißung wird das Halteelement zwischen den beiden Hülsenteilen angeordnet, wobei mittels des genannten insbesondere als konischer Ringbund ausgebildeten Stützelements des vorderen Hülsenteils das Halteelement definiert zentriert wird. Der hintere Hülsenteil weist eine vorgegebene Schweißgeometrie derart auf, dass während des Schweißprozesses dessen Material aufgeschmolzen wird und als Schweißgutzusatz herangezogen wird. Nach der Herstellung der Verbindung, insbesondere der Schweißverbindung ist die Hülse eine einheitlich kompakte Baukomponente, in welche das Halteelement unlösbar integriert ist. Durch das Verschweißen ist in bevorzugter Weise eine stoffschlüssige Verbindung der beiden Hülsenteile realisiert, und die fertige Hülse ist ein einheitliches, letztendlich einteiliges Bauelement. Ein Herauslösen des Halteelements aus der Hülse oder eine fehlerhafte Positionierung des Halteelements in der Hülse und hieraus resultierende Fehlfunktionen, insbesondere Reduzierung der Halte- bzw. Auszugskräfte, werden vermieden. Alternativ kann die Hülse einteilig als ein Kunststoffspritzteil gefertigt und/oder ausgebildet sein, wobei das Halteelement bei der Fertigung unmittelbar in die Hülse integriert wird.

Wie oben bereits beschrieben, enthält das Halteelement einen zwischen den Hülsenteilen festgelegten und/oder in die Hülse nach dem Verschweißen integrierten Ringteil, so dass im Gegensatz zu einem offenen bzw. mit einem axialen Spalt ausgebildeten Halteelement, keine nachteiligen Toleranzketten mit den zugeordneten Aufnahmedurchmessern der Hülse gebildet sind, wobei ferner eine erheblich verbesserte Formstabilität des Halteelements erreicht ist. Aufgrund zur Längsachse unter einem vorgegebenen Winkel, vorzugsweise zwischen 20 - 45°, insbesondere zwischen 25 - 40° und zweckmäßig zwischen 28 - 35°, Anordnung der Haltekrallen und/oder der bevorzugt nach Art eines Konus ausgebildeten äußeren Auflagefläche des Stützkörpers oder Ringbundes ist eine Optimierung hinsichtlich der Einschubkräfte und/oder der Haltekräfte erreicht.

Infolge der somit erreichten relativen Verlängerung der Haltekrallen bei gleichzeitig relativ kleinem Aufnahmedurchmesser des Halteelements in der Hülse und/oder einem geringen Außendurchmesser der Hülse sind die Haltekrallen gleichwohl sehr flexibel. Das Einstecken eines Rohrendes kann somit mit einem erheblich minimierten Kraftaufwand erfolgen. Ferner weisen die Krallen eine besondere Krallenform dahingehend auf, dass die in die Rohraußenfläche eingreifenden Kanten der Haltekrallen verrundet und/oder abgerundet ausgebildet sind. Hierdurch wird zum einen eine zusätzliche Reduzierung der Einsteckkraft erreicht, da das Rohrende beim Einstecken zunächst auf die äußeren Kanten der Haltekrallen trifft. Zum anderen bewirkt im Falle einer Zugkraft aus der Steckkupplung heraus ein progressives Eindringen der Krallenkante in das Rohr ein Ansteigen der Haltekraft. Erfindungsgemäß weisen die Haltekrallen eine gewölbte Krallenform und/oder Schaufelform auf, wodurch eine große Formstabilität gewährleistet ist.

Besondere Ausgestaltungen und Weiterbildungen der Erfindung sind in den. Unteransprüchen sowie der nachfolgenden Beschreibung angegeben.

Die Erfindung wird nachfolgend anhand der in der Zeichnung dargestellten besonderen Ausführungsbeispiele näher erläutert, ohne dass insoweit eine Beschränkung erfolgt. Es zeigen:
- Fig. 1: einen axialen Schnitt durch die Steckkupplung,
- Fig. 2, 3: axiale Schnitte der beiden Hülseteile und der aus diesen zusammengesetzten, verschweißten Hülse samt Halteelement.
- Fig. 4: teilweise und vergrößert die Steckkupplung mit eingestecktem Rohrende,
- Fig. 5: das Halteelement in einer perspektivischen Darstellung,
- Fig. 6: ein alternatives Ausführungsbeispiel der Hülse, in einem axialen Schnitt
- Fig. 7: einen axialen Schnitt durch den Grundkörper,
- Fig. 8: ein Ausführungsbeispiel der Steckkupplung in Form eines T-Stücks,
- Fig. 9: ein weiteres Ausführungsbeispiel der Steckkupplung als Wandscheibe.

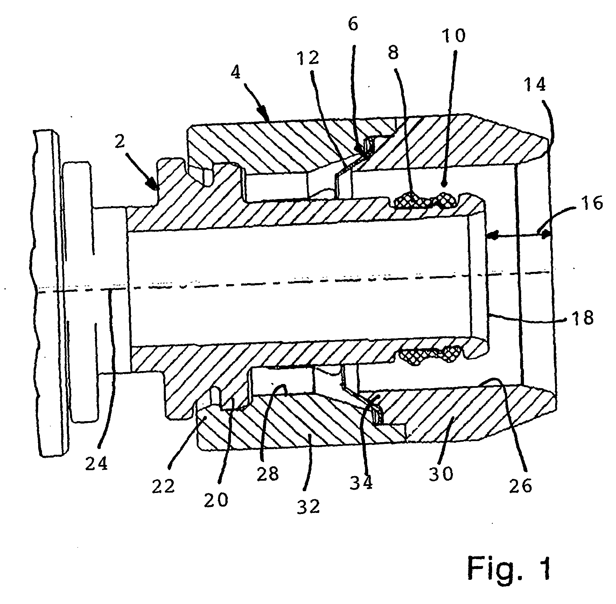

Fig. 1 zeigt einen axialen Schnitt der Steckkupplung, welche einen Grundkörper 2, eine mit diesem verbundene Hülse 4, ein ringförmiges Halteelement 6 sowie ein ringförmiges Dichtelement 8 enthält. Die Hülse umgibt einen Teil des Grundkörpers 2 unter Bildung eines Ringspalts 10, in welchen ein Ende eines Rohres einsteckbar ist, wobei das Halteelement 6 mit Haltekrallen 12 an der Außenfläche des Rohrendes unter Vorspannung angreift und das auf dem Grundkörper 2 außen angeordnete Dichtelement 8 an der Innenfläche des Rohrendes dichtend anliegt. Die Hülse 4 ragt mit ihrem vorderen freien Hülsenende 14 in einem vorgegebenen Abstand 16 über das freie Ende 18 derart hinaus, dass beim Einstecken des Rohrendes in den Ringspalt 10 eine sichere Führung und Zentrierung des Rohrendes bezüglich der Steckkupplung erfolgt und eine Beschädigung, ein Abquetschen oder gar ein Wegdrücken des Dichtelements 8 vom Grundkörper 2 unterbunden wird. Die Hülse 4 ist mit dem Grundkörper 2 fest verbunden, zweckmäßig über miteinander korrespondierende und/oder ineinander greifende Rastmittel 20, 22. Wie dargestellt, ist das eine Rastmittel 20 des Grundkörpers 2 als ein radialer Steg ausgebildet, welcher in das andere, als Ringnut der Hülse 4 ausgebildete Rastmittel 22 eingreift. Alternativ kann der Grundkörper 2 eine Ringnut für einen radial nach innen gerichteten Steg der Hülse 4 aufweisen. Obgleich eine Rastmittel aufweisende dauerhafte und/oder nicht lösbare Verbindung sich als besonders zweckmäßig erwiesen hat, kann im Rahmen der Erfindung die Verbindung zwischen dem Grundkörper 2 und der Hülse 4 auch lösbar ausgebildet sein, wobei hier insbesondere auf eine Schraubverbindung oder eine Bajonettverbindung hingewiesen sei. Des weiteren sei darauf hingewiesen, dass die Steckkupplung Bestandteil eines Fittings oder als solcher ausgebildet sein kann und gleichermaßen in eine Armatur oder ein sonstiges Gerät derart integriert sein kann, dass der Grundkörper einteilig, beispielsweise mit dem Gehäuse der Armatur ausgebildet ist.

Das Dichtelement 8 ist in Richtung der Längsachse 24 axial beabstandet zu dem Bereich angeordnet, in welchem das Halteelement 6 vorgesehen ist. Das Halteelement 6 und das Dichtelement 8 können aufgrund der axialen Beabstandung unabhängig voneinander dimensioniert werden, wobei keine gegenseitige Beeinflussung der unterschiedlichen Funktionen zu befürchten ist. Die radial außen angeordnete, bevorzugt zylindrische Innenfläche 26 des vorderen Teiles der Hülse 4 ermöglicht somit eine definierte und/oder sichere Rohrabstützung im Bereich des Dichtelements 8. Eine unzulässige Aufweitung des Rohrendes infolge von Druck und/oder mechanische Belastungen im Bereich des Dichtelements werden vermieden, und die notwendige Verpressung des an der Innenfläche des Rohrendes anliegenden Dichtelements bleibt bestehen. Der hintere Hülsenteil 32 enthält gleichfalls eine dem eingesteckten Rohrende zugewandte Innenfläche 28. In bevorzugter Weise ist der Innendurchmesser dieser Innenfläche 28 zumindest näherungsweise gleich groß wie der, insbesondere durch Toleranzen vorgegebene maximale Außendurchmesser des einzusteckenden Rohrendes. Hierdurch erfolgt eine optimierte Führung und Stabilisierung des Rohrendes. Hingegen weist die Innenfläche 26 des vorderen Hülsenteils 30 einen Innendurchmesser auf, welcher um einen vorgegebenen Wert, insbesondere in der Größenordnung bis zu einigen zehntel Millimetern, größer ist als der Innendurchmesser des hinteren Hülsenteils 32 im Bereich dessen Innenfläche 28. Hierdurch wird einerseits die Einschubkraft auf ein Minimum reduziert und andererseits eine optimierte Führung und Stabilisierung des eingeschobenen Endes des Rohres, welches bevorzugt als Verbundrohr ausgebildet ist, gewährleistet.

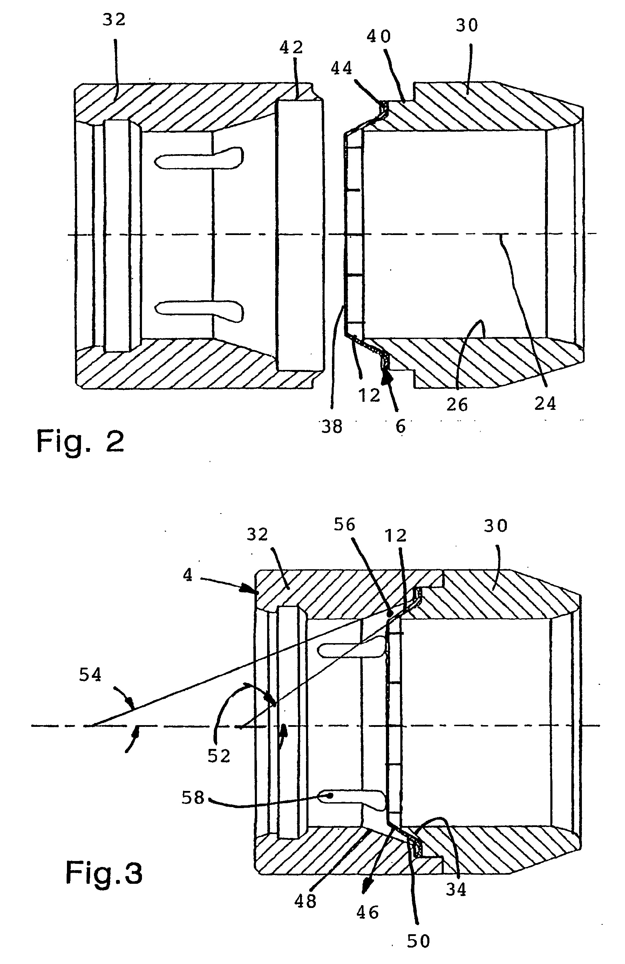

Fig. 2 zeigt den ersten vorderen Hülsenteil 30 und den zweiten hinteren Hülsenteil 32 vor der Herstellung der Verbindung bzw. Verschweißung. Fig. 3 zeigt nach Herstellung der Verbindung, insbesondere einer Schweißverbindung, die fertige Hülse 4 mit dem integrierten Halteelement 6. Der erste Hülsenteil 30 enthält einen Stützkörper 34 für das Halteelement 6 bzw. dessen Haltekrallen 12, deren hier nur schematisch angedeutete freie Kanten 38 auf einem kleineren Radius liegen als der Radius der Innenfläche 26 des ersten, vorderen Hülsenteils 30. Beim Einstecken des Rohrendes werden die Krallenkanten 38 radial nach außen gedrückt und greifen infolge dessen unter Klemm- oder Vorspannung an der Außenfläche des Rohrendes zwecks dessen Fixierung in der Steckkupplung an. Der Stützkörper 34 ist bevorzugt als ein konischer Ringbund, insbesondere des ersten vorderen Hülsenteils 30, ausgebildet und/oder integraler Bestandteil des ersten Hülsenteils 30 und somit nach dem Zusammenbau der beiden Hülsenteile 30, 32 integraler Bestandteil der kompletten Hülse 4. Mittels des Stützkörpers 34, insbesondere des die konische Außenfläche aufweisenden Ringbundes, wird bei der Herstellung der Verbindung der beiden Hülsenteile 30, 32 in besonders zweckmäßiger Weise eine Zentrierung des Halteelements 6 bezüglich der Längsachse 24 sichergestellt. Wie ersichtlich, enthalten der erste Hülsenteil 30 und der zweite Hülsenteil 32 aufeinander abgestimmte und/oder ineinander greifende Verbindungsteile 40, 42, welche eine definierte gegenseitige Ausrichtung ebenso ermöglichen, wie eine einfache und funktionsgerechte, insbesondere dauerhafte Verbindung, bevorzugt Schweißverbindung, der beiden Hülsenteile 30, 32.

Zur definierten Festlegung des Halteelements 6 zwischen den beiden Hülsenteilen 30, 32 weist das Halteelement 6 radial außen einen über den Umfang geschlossenen Ringteil 44 auf, welcher bevorzugt im wesentlichen in einer zur Längsachse 24 orthogonalen Radialebene angeordnet ist. Wie insbesondere aus Fig. 2 ersichtlich, ist der geschlossene Ringteil 44, welcher also keinen in axialer Richtung verlaufenden Schlitz aufweist, bezogen auf die Radialebene teilweise sphärisch nach Art eines Toroids gekrümmt ausgebildet. Hierdurch erfolgt beim Zusammenbau der Hülse in zweckmäßiger Weise ein Toleranzausgleich, wobei das Halteelement im Übrigen, insbesondere über die Haltekrallen 12 mittels des Stützkörpers 34 und zentriert wird. Nach der Herstellung der Verbindung, insbesondere der stoffschlüssigen Schweißverbindung, ist gemäß Fig. 3 die Hülse 4 eine einteilige und/oder kompakte Baukomponente, in welche das Halteelement integriert ist und/oder definiert gesichert ist. Das Halteelement 6 ist mit dem geschlossenen Ringteil 44 in der Hülse 4 sowohl axial als auch radial festgelegt, wobei die federelastischen Haltekrallen 12 beim Einstecken eines Rohrendes in Richtung des Pfeiles 46 nach außen gedrückt werden und nachfolgend unter Vorspannung zum Festklemmen des eingesteckten Rohrendes auf dessen Außenfläche mit vorgegebener Klemmspannung einwirken. Der geschlossene Ringteil 44 gewährleistet die axiale ebenso wie radiale unverschiebbare Fixierung des Halteelements 6.

Wie ferner aus Fig. 3 ersichtlich, weist die Hülse 4 und/oder der zweite Hülsenteil 32 im Bereich der Haltekrallen 12 einen bevorzugt konisch in Richtung zum freien Hülsenende 14 erweiterten, inneren Flächenteil 48 derart auf, dass die federelastischen Haltekrallen 12 die radiale Aufweitung in Richtung des Pfeiles 46 durchführen können. Es sei hier ausdrücklich festgehalten, dass das Halteelement 6 aus einem federelastischen Werkstoff, insbesondere Federstahl oder dergleichen besteht. Der Stützkörper bzw. konische Ringbund 34 weist eine äußere Auflagefläche 50 für das Halteelement bzw. dessen Haltekrallen 12 auf. Die Auflagefläche 50 ist bevorzugt im Wesentlichen konisch ausgebildet und liegt in einem Winkel 52 zur Längsachse 24, wobei im unbelasteten Zustand die Haltekrallen 12 im Wesentlichen in dem gleichen Winkel zur Längsachse 24 stehen. Der Winkel 52 ist im Bereich zwischen 20° bis 45°, zweckmäßig zwischen 25° bis 40°, vorzugsweise zwischen 28° bis 35°, insbesondere von 30° bis 33° vorgegeben. Der innere Flächenteil 48 ist unter einem Winkel 54 derart angeordnet, dass die Haltekrallen 12 beim Einstecken eines Rohrendes ungehindert in den vom inneren Flächenteil 48 radial außen begrenzten Freiraum 56 aufgespreizt werden können. Vorteilhaft ist der Winkel 54 um einen vorgegebenen Faktor kleiner als der Winkel 52, wobei der Faktor im Bereich zwischen 0,3 bis 0,7, vorteilhaft zwischen 0,4 bis 0,6, und insbesondere näherungsweise bei 0,5 liegt. Im Übrigen sei darauf hingewiesen, dass die Hülse 4 und/oder der hintere Hülsenteil 32 wenigstens eine, zweckmäßig mehrere radiale Durchbrechungen oder Sichtfenster 58 enthält, durch welche eine Kontrolle des ordnungsgemäßen vollständigen Einsteckens des Rohrendes in die Steckkupplung ermöglicht wird.

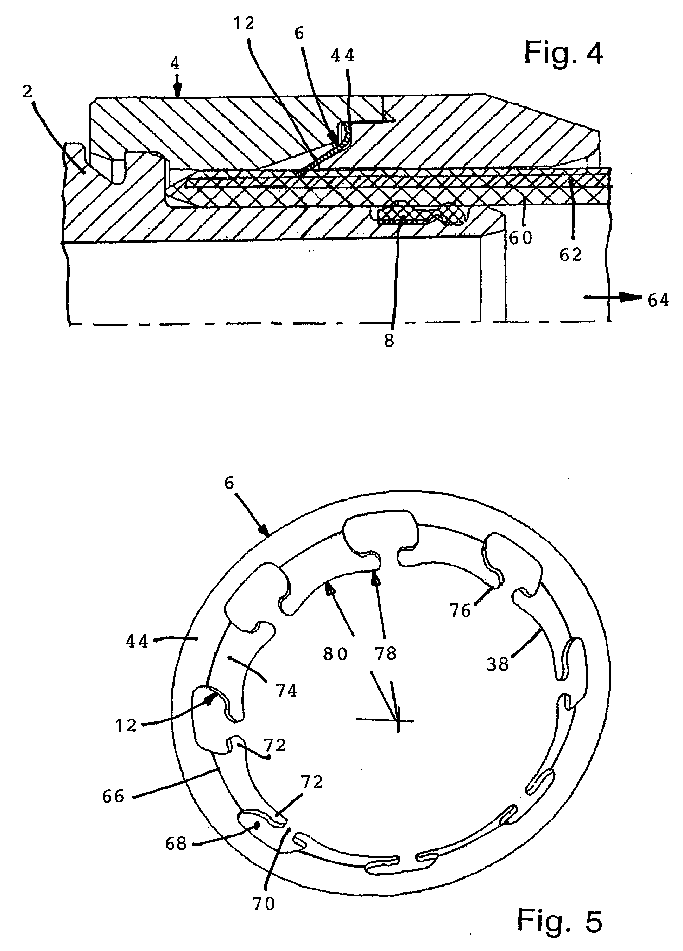

Fig. 4 zeigt teilweise und vergrößert die Steckkupplung mit einem Rohr, dessen Ende 60 in den Ringspalt zwischen dem Grundkörper 2 und der Hülse 4 eingesteckt ist. Das Dichtelement 8 liegt mit seinen beiden radial außen angeordneten Dichtwulsten an der Innenfläche des Rohrendes 60 an, während die Haltekrallen 12 des Halteelements 6 an der Außenfläche des Rohrendes 60 angreifen. Das Rohrende 60 ist als ein Verbundrohr mit einer Metall-Zwischenschicht 62 ausgebildet. Aufgrund des erfindungsgemäßen Stützkörpers 34, welcher bevorzugt als konischer Ringbund ausgebildet ist, und in Kombination mit der Ausbildung der Länge der Haltekrallen wird gewährleistet, dass insbesondere im Falle von Zugkräften in Richtung des Pfeiles 64 auf das Rohrende 60 die Haltekrallen 12 sicher abgestützt werden und nicht bis zur Metall-Zwischenschicht 62 eindringen können und diese verletzen.

Fig. 5 zeigt eine Ansicht des Halteelements unter einem zur Längsachse geneigten Blickwinkel. Das Halteelement 6 enthält den über den Umfang geschlossenen Ringteil 44 sowie acht schaufelförmige und/oder gewölbte Haltekrallen 12. Der Ringteil 44 ist in der Hülse in einer zur Längsachse 24, welche hier zur Zeichenebene geneigt steht, im Wesentlichen orthogonalen Ebene angeordnet. Wie oben erläutert, sind die schaufelförmigen Haltekrallen 12 zur Längsachse 24 jeweils unter einem vorgegebenen Winkel geneigt angeordnet, wobei zwischen dem Ringteil 44 und den jeweiligen Haltekrallen 12 eine Abwinkelung 66 vorhanden ist. Wie bei den gemäß Zeichnung unten liegenden Haltekrallen ersichtlich, sind die Haltekrallen 12 in einem vorgegebenen Radius gewölbt, welcher auf dem Radius der Außenfläche des Rohrendes abgestimmt ist. Das Halteelement 6 enthält zwischen den Haltekrallen 12 Ausnehmungen 68, deren Ecken zweckmäßig abgerundet sind und welche in Richtung zu den Krallenkanten 38 in offene Durchbrechungen 72 münden. Die Haltekrallen 12 enthalten somit zu den freien Krallenkanten 70 hin sich zu beiden Seiten in Umfangsrichtung erstreckende Erweiterungen 72. Die als federelastische Zungen ausgebildeten Haltekrallen 12 weisen anschließend an den geschlossenen Ringteil 44 und zwischen den in Umfangsrichtung beabstandet angeordneten Ausnehmungen einen Mittelteil 74 auf, an welchen die genannten Erweiterungen 72 anschließen.

Aufgrund der bezüglich der Längsachse 24 vorgegebenen Wölbung oder Krümmung der derart schaufelförmig ausgebildeten Haltekrallen 12 weisen die äußeren Kanten 76 der Erweiterungen 72 zur Längsachse 24 einen Radius 78 auf, welcher um einen vorgebenenen Betrag kleiner ist als der Radius 80 im Bereich der Mitte der Krallenkanten 38. Durch die erfindungsgemäße besondere Krallenform und/oder der Verrundung infolge der in das Rohrende eingreifenden Krallenkante 38 trifft das Rohrende beim Einstecken in die Steckkupplung zunächst auf die äußeren Kanten 76 der Haltekrallen 12. Durch die erläuterte besondere Formgebung der Haltekrallen wird die Einsteckkraft für das Rohrende in vorteilhafter Weise reduziert, und zwar bevorzugt in Kombination mit der vergleichsweise langen Ausbildung und des Hebelarms des federelastisch und zur Längsachse geneigt angeordneten Halteelementes 12. Weiterhin wird aufgrund der erläuterten Ausbildung des Halteelements bei Zugkräften auf das Rohrende in Richtung aus der Steckkupplung heraus ein progressives Eindringen der Krallenkante 38 in das Rohr bewirkt und ein Ansteigen der Haltekraft. Zudem sei ausdrücklich darauf hingewiesen, dass infolge der gewölbten Ausbildung der Haltekrallen 12 diese eine hohe Formstabilität aufweisen. Da das Halteelement 6 mittels des geschlossenen Ringteils 44 in der Hülse axial und radial unverschiebbar fixiert ist, werden bei einwirkenden Kräften unerwünschte Relativbewegungen des Halteelements 6 zur Hülse und/oder dem Rohr ende und daraus resultierende lokale Überbeanspruchungen der Haltekrallen 12 und/oder deren zu tiefes Eindringen in das Rohrende zuverlässig vermieden.

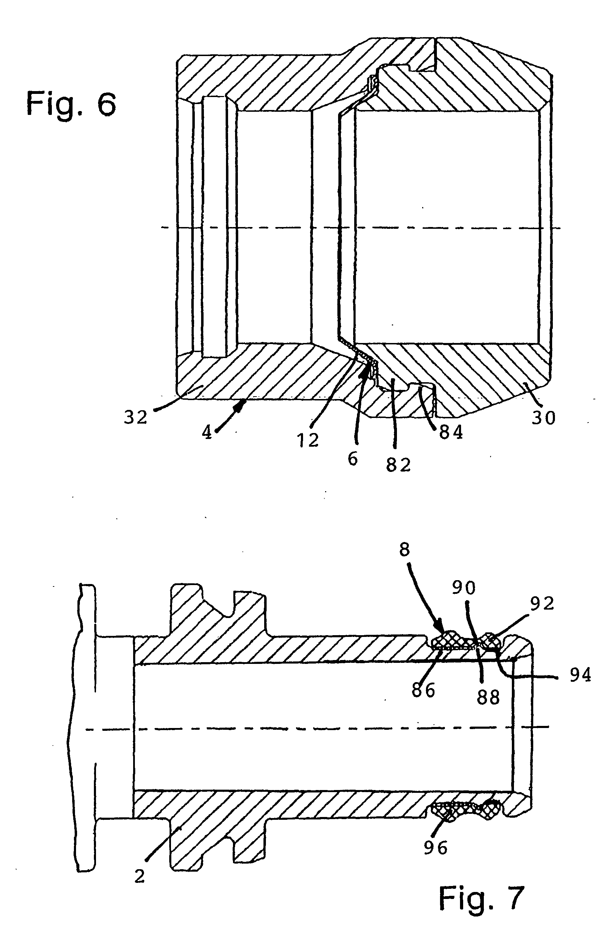

Fig. 6 zeigt eine alternative Ausgestaltung der Hülse 4, deren Hülsenteile 30, 32 mittels einer Clips- oder Rastverbindung verbunden sind. Die Hülsenteile 30 und 32 weisen miteinander korrespondierende und ineinander greifende Rastelemente 82, 84 auf, wobei gemäß obigen Erläuterungen das Halteelement 6 zwischen den beiden Hülsenteilen 30, 32 fest gelegt ist. Im Übrigen gelten obige Ausführungen entsprechend.

In Fig. 7 ist eine besondere Ausgestaltung des Grundkörpers 2 mit dem in einer Ringnut 86 angeordneten Dichtelement 8 in einem axialen Schnitt dargestellt. Die Ringnut 86 enthält einen radial nach außen gerichteten Ringkörper 88, welcher in eine korrespondierende und radial innen liegende Ausnehmung 90 des Dichtelements 8 eingreift. In bevorzugter Weise ist zwischen dem vorderen Abschnitt 92 des Dichtelements 8 und der Ringnut 86 eine Klebeverbindung 94 vorhanden. Der in Richtung auf das Innere der Steckkupplung bzw. des Grundkörpers 2 anschließende hintere Abschnitt 96 des Dichtelements 8 ist hingegen frei und/oder lose in der Ringnut 86 angeordnet. Infolge der nur im Bereich des vorderen Abschnitts 92 bestehenden Klebeverbindung 94 des Dichtelements 8 wird während des Einsteckens des Rohrendes das Dichtelement 8 sicher am Platz gehalten. Andererseits ist eine Vergrößerung der Einsteckkräfte nicht gegeben, da der hintere Abschnitt 96 des Dichtelements 8 in axialer Richtung flexibel und/oder bewegbar ist. Das Dichtelement 8 ist zumindest radial außen mit einem Gleitmittel versehen, und zwar beispielsweise während der Fittingmontage nachträglich mit Fett oder dergleichen versehen oder direkt bei der Herstellung mit einem geeigneten Gleitmittel beschichtet. Es sei festgehalten, dass durch das Gleitmittel die Kräfte während des Einsteckens des Rohrendes niedrig gehalten werden, und ferner eine Beschädigung oder gar eine Zerstörung des Dichtelements 8 vermieden wird.

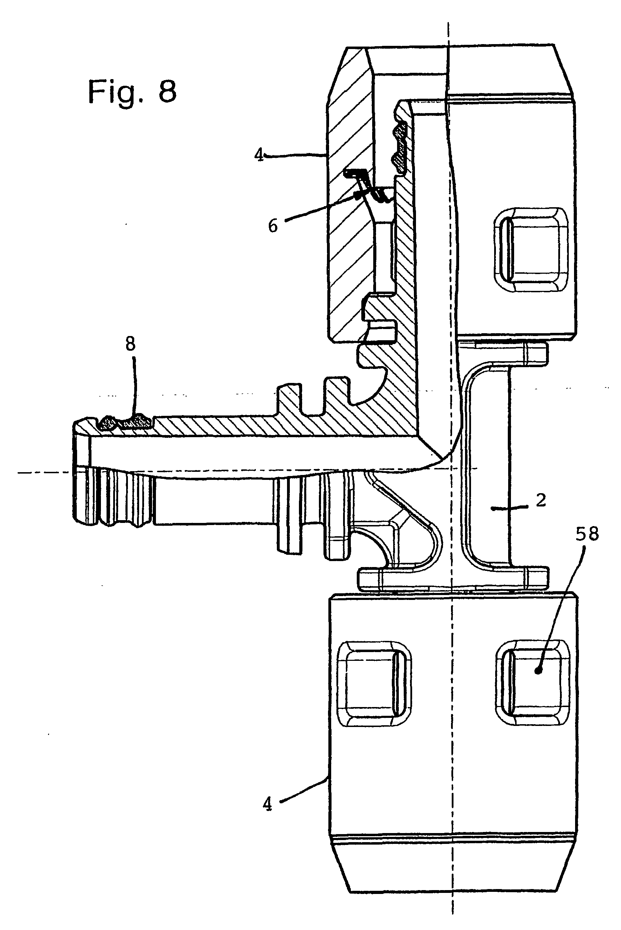

In Fig. 8 ist eine besondere Ausgestaltung der erfindungsgemäßen Steckkupplung in Form eines T-Stückes zur Verbindung von drei Rohrenden teilweise als seitliche Ansicht und teilweise geschnitten dargestellt. Die drei Kupplungsteile sind übereinstimmend ausgebildet, wobei die beiden koaxialen Kupplungsteile die Hülsen 4 aufweisen, während der linke Kupplungsteil zwecks Verdeutlichung der konstruktiven Ausbildung des Grundkörpers 2 ohne Hülse dargestellt ist. Der T-förmige Grundkörper 2 und die Hülsen 4 bestehen in vorteilhafter Weise aus Kunststoff. Jede der einteilig ausgebildeten Hülsen 4 bestehen gemäß obigen Ausführungen aus den beiden insbesondere durch Schweißen stoffschlüssig verbundenen Hülsenteilen mit dem integrierten Halteelement 6. Die bevorzugt vier als Durchbrechungen ausgebildeten Sichtfenster 58 sind hier gut zu erkennen. Im Übrigen gelten obige Ausführungen entsprechend.

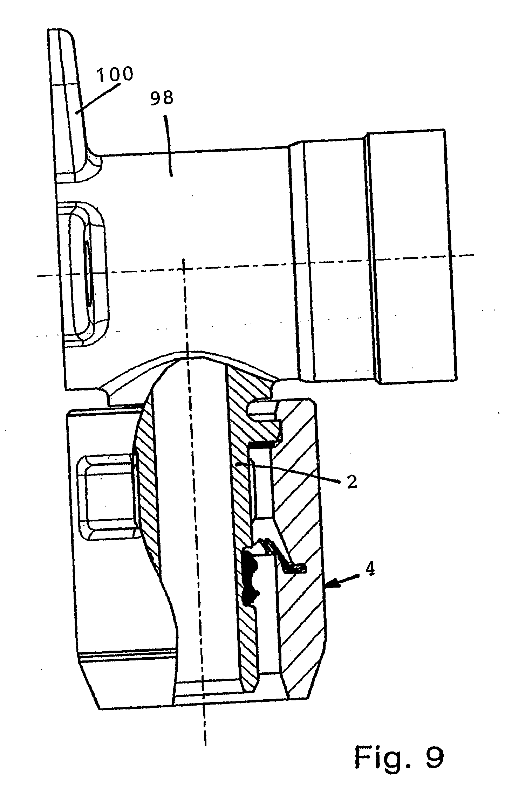

Fig. 9 zeigt ein weiteres Ausführungsbeispiel eines als sogenannte Wandscheibe ausgebildeten Fittings mit einer die Hülse 4 enthaltenden Steckkupplung. Der Grundkörper 2 ist Bestandteil des Fitting-Körpers 98, welcher zum Anschluss eines anderen Rohres, insbesondere eines Metallrohres, über eine hier nicht weiter dargestellte und im Inneren des Fitting-Körpers 98 vorgesehenen Verbindungseinrichtung, bevorzugt einer Gewindeverbindung, ausgebildet ist. Der Fitting-Körper 98 und der integral mit diesem ausgebildete Grundkörper 2 der Steckkupplung bestehen bevorzugt aus Metall, insbesondere aus Messing, während die erfindungsgemäße Steckkupplung mit der bevorzugt aus Kunststoff bestehenden Hülse 4 grundsätzlich mit den oben erläuterten Ausführungsbeispielen übereinstimmt. Der Fitting-Grundkörper 98 enthält flanschartig ausgebildete Befestigungskörper 100 zwecks Verbindung mit einer Wand, einem Montagesystem oder dergleichen.

### Bezugszeichen

- 2: Grundkörper
- 4: Hülse
- 6: Halteelement
- 8: Dichtelement
- 10: Ringspalt
- 12: Haltekralle
- 14: vorderes, freies Hülsenende
- 16: Abstand
- 18: freies Ende von 2
- 20: Rastmittel / Steg von 2
- 22: Rastmittel /Ringnut von 4
- 24: Längsachse
- 26: Innenfläche von 30
- 28: Innenfläche von 32
- 30: erster, vorderer Hülsenteil
- 32: zweiter, hinterer Hülsenteil
- 34: Stützkörper / konischer Ringbund
- 38: Krallenkante
- 40: Verbindungsteil von 30
- 42: Verbindungsteil von 32
- 44: geschlossener Ringteil von 6
- 46: Pfeil
- 48: innerer Flächenteil von 32
- 50: äußere Auflagefläche von 34
- 52: Winkel von 50
- 54: Winkel von 48
- 56: Freiraum
- 58: Durchbrechung / Sichtfenster
- 60: Rohrende
- 62: Metall-Zwischenschicht
- 64: Pfeil
- 66: Abwinkelung
- 68: Ausnehmung
- 70: Durchbrechung in 6
- 72: Erweiterung von 12
- 74: Mittelteil von 12
- 76: äußere Kante von 12
- 78: Radius von 76
- 80: mittlerer Radius von 38
- 82: Rastelement von 30
- 84: Rastelement von 32
- 86: Ringnut in 2
- 88: Ringkörper in 86
- 90: Ausnehmung in 8
- 92: vorderer Abschnitt von 8
- 94: Klebeverbindung
- 96: hinterer Abschnitt von 8
- 98: Fitting-Grundkörper
- 100: Befestigungskörper

## Patentansprüche

1. Steckkupplung für Rohre, enthaltend einen Grundkörper (2); bezüglich welchem ein Rohrende (60) fixierbar ist und welcher teilweise in das Rohrende (14) einschiebbar ist, ferner enthaltend ein Dichtelement (8), eine mit dem Grundkörper (2) verbindbare Hülse (4) und ein im Inneren der Hülse (4) angeordnetes und fixiertes Halteelement (6) mit einem geschlossenen Ringteil (44) und Haltekrallen (12) zur Fixierung des Rohrendes (60), wobei zur Aufnahme des Rohrendes (60) ein Ringspalt (10) zwischen dem Grundkörper (2) und der Hülse (4) vorhanden ist, sowie enthaltend in der Hülse (4) und radial innerhalb des Halteelements (6) einen Stützkörper (34) mit einer äußeren Auflagefläche (50), auf welcher die federelastisch ausgebildeten Haltekrallen (12) abgestützt sind und welche in einem vorgegebenen, zum vorderen freien Hülsenende (14) sich öffnenden Winkel (52) angeordnet ist,
**dadurch gekennzeichnet, dass** der geschlossene Ringteil (44) des Halteelements (6) im Verbindungsbereich eines vorderen Hülsenteils (30) mit einem hinteren Hülsenteil (32), welche fest und dauerhaft miteinander verbunden sind, unlösbar integriert und weder axial noch radial bewegbar fixiert ist,
dass die Innenfläche (26) des vorderen Hülsenteils (30), welcher den Stützkörper (34) als integralen Bestandteil aufweist, zur Abstützung des Rohrendes (14) ausgebildet ist, und dass der hintere Hülsenteil (32) einen inneren Flächenteil (48) aufweist, welcher unter Bildung eines Freiraumes (56) beabstandet zur äußeren Auflagefläche (50) des Stützkörpers (34) angeordnet ist, wobei im Freiraum (56) die Haltekrallen (12) bewegbar sind.

2. Steckkupplung nach Anspruch 1, **dadurch gekennzeichnet, dass** der geschlossene Ringteil (44) des Halteelements (6) im Wesentlichen in einer zur Längsachse (24) der Steckkupplung orthogonalen Ebene angeordnet ist und dass die Haltekrallen (12) im Bereich einer Abwinkelung (66) des Halteelements (6) in Richtung zum Inneren der Steckkupplung abgewinkelt angeordnet sind.

3. Steckkupplung nach Anspruch 1 oder 2, **dadurch gekennzeichnet, dass** die beiden Hülsenteile (30, 32), Insbesondere mittels einer Schweißverbindung stoffschlüssig miteinander verbunden sind und dass die Hülse (4) ein einheitliches Bauteil ist.

4. Steckkupplung nach einem der Ansprüche 1 bis 3, **dadurch gekennzeichnet, dass** der Stützkörper (34) als ein Ringbund ausgebildet ist, dessen äußere Auflagefläche (50) im Wesentlichen konisch ausgebildet ist.

5. Steckkupplung nach einem der Ansprüche 1 bis 4. **dadurch gekennzeichnet, dass** die Haltekrallen (12) des Halteelements (6) schaufelförmig und/oder bezüglich der Längsachse (24) gewölbt ausgebildet sind und/oder dass in Umfangsrichtung zwischen den benachbarten Haltekrallen (12) jeweils eine Ausnehmung (68) vorgesehen ist, in welche eine radial innen liegende Durchbrechung (70) mündet, welche in Umfangsrichtung wesentlich kleiner ausgebildet ist als die zugeordnete Ausnehmung (68).

6. Steckkupplung nach einem der Ansprüche 1 bis 5, **dadurch gekennzeichnet, dass** die Haltekrallen (12) radial an den Ringteil (44) anschließend einen Mittelteil (74) aufweisen und radial noch weiter innen in Richtung zur Krallenkante (38), zweckmäßig zu beiden Seiten, mit Erweiterungen (72) versehen sind.

7. Steckkupplung nach Anspruch 6, **dadurch gekennzeichnet, dass** zwischen benachbarten Mittelteilen (74) die Ausnehmungen (68) angeordnet sind und in Umfangsrichtung zwischen den Erweiterungen (72) benachbarter Halteelemente (6) die Durchbrechung (70) vorgesehen ist, wobei die Durchbrechung (70) in Umfangsrichtung wesentlich kleiner ausgebildet Ist als die zugeordnete Ausnehmung (68).

8. Steckkupplung nach einem der Ansprüche 1 bis 7, **dadurch gekennzeichnet, dass** ein dem freien Ende (18) des Grundkörpers (2) nächstliegender vorderer Abschnitt (92) des Dichtelements (8), welches bevorzugt in einer Ringnut (86) des Grundkörpers (2) angeordnet ist, mittels einer Klebeverbindung (94) mit dem Grundkörper (2) verbunden ist, während ein hinterer Abschnitt (96) des Dichtelements (8) bezüglich des Grundkörpers (2) und insbesondere dessen Ringnut (86) im Wesentlichen in Richtung der Längsachse (24) bewegbar angeordnet ist.

9. Steckkupplung nach einem der Ansprüche 1 bis 8, **dadurch gekennzeichnet, dass** zwischen der äußeren Auflagefläche (50) des Stützkörpers (34) und dem radial nach außen zu diesem beabstandet angeordneten Inneren Flächenteil (48) des hinteren Hülsenteils (32) der Freiraum (56) vorgesehen ist, in welchen die Haltekrallen (12) beim Einschieben des Rohrendes (60), bewegbar und aufspreizbar sind.

## Claims

1. Plug-in coupling for pipes comprising a basic element (2), relative to which a pipe end (60) can be fixed and which can be inserted in part into the pipe end (14), further comprising a sealing element (8), a sleeve (4) which can be connected to the basic element (2) and a retaining clement (6) arranged and fixed in the inside of the sleeve (4) with a closed annular part (44) and retaining claws (12) for fixing the pipe end (60), wherein an annular gap (10) is located between the basic element (2) and the sleeve (4) for receiving the pipe end (60), and contained in the sleeve (4) and radially inside the retaining element (6) there is a support element (34) comprising an outer supporting face (50), on which the resiliently configured retaining claws (12) are supported and which is arranged at a predetermined angle (52) which opens out onto the leading free sleeve end (14), **characterised in that** the closed annular part (44) of the retaining element (6) is non-detachably integrated and fixed in an axially and radially immovable manner in the region of connection of a leading sleeve part (30) to a trailing sleeve part (32) which are rigidly and durably connected to one another, **in that** the inner face (26) of the leading sleeve part (30), which comprises the support element (34) as an integral constituent, is configured for supporting the pipe end (14), and **in that** the trailing sleeve part (32) comprises an inner face part (48) which is arranged set apart from the outer supporting face (50) of the support element (34) so as to form a free space (56), the retaining claws (12) being movable in said free space (56).

2. Plug-in coupling according to claim 1, **characterised in that** the closed annular part (44) of the retaining element (6) is arranged substantially in a plane that is orthogonal to the longitudinal axis (24) of the plug-in coupling and **in that** the retaining claws (12) are angled in the region of a bend (66) of the retaining element (6) towards the interior of the plug-in coupling.

3. Plug-in coupling according to either claim 1 or claim 2, **characterised in that** the two sleeve parts (30, 32) are materially connected to one another in particular by means of a weld and **in that** the sleeve (4) is a one-piece component.

4. Plug-in coupling according to any one of claims 1 to 3, **characterised in that** the support element (34) is configured as an annular band, the outer support face (50) of which is configured substantially conically.

5. Plug-in coupling according to any one of claims 1 to 4, **characterised in that** the retaining claws (12) of the retaining element (6) are configured in the shape of a scoop and/or curved with regard to the longitudinal axis (24) and/or **in that** there is provided in the circumferential direction between the adjacent retaining claws (12) a respective recess (68) into which there opens an aperture (70) located radially inside and configured in the circumferential direction substantially smaller than the associated recess (68).

6. Plug-in coupling according to any one of claims 1 to 5, **characterised in that** the retaining claws (12) comprise a central part (74) radially adjoining the annular part (44) and are provided with extensions (72) radially further inside towards the claw edge (38), expediently on both sides.

7. Plug-in coupling according to claim 6, **characterised in that** the recesses (68) are arranged between adjacent central parts (74) and the aperture (70) is provided in the circumferential direction between the extensions (72) of adjacent retaining elements (6), the aperture (70) being configured in the circumferential direction substantially smaller than the associated recess (68).

8. Plug-in coupling according to any one of claims 1 to 7, **characterised in that** a leading portion (92) of the sealing element (8), which is preferably arranged in an annular groove (86) of the basic element (2) and located close to the free end (18) of the basic element (2), is connected to the basic element (2) by means of an adhesive bond (94), whilst a trailing portion (96) of the sealing element (8) is arranged movably with regard to the basic element (2) and in particular the annular groove (86) thereof substantially in the direction of the longitudinal axis (24).

9. Plug-in coupling according to any one of claims 1 to 8, **characterised in that** between the outer supporting face (50) of the support clement (34) and the inner face part (48), arranged so as to be radially outwardly set apart therefrom, of the trailing sleeve part (32), the free space (56) is provided, in which the retaining claws (12) are movable and expandable upon insertion of the pipe end (60).

## Revendications

1. Accouplement à fiche pour tubes, comprenant un corps de base (2) par rapport auquel une extrémité (60) de tube peut être fixée et qui peut être enfoncé partiellement dans l'extrémité (60) de tube, comprenant de plus un élément d'étanchéité (8), une douille (4) pouvant être reliée au corps de base (2) et un élément de maintien (6) placé et fixé à l'intérieur de la douille (4) avec une partie annulaire fermée (44) et des griffes de maintien (12) pour immobiliser l'extrémité (60) de tube, une fente annulaire (12) étant présente entre le corps de base (2) et la douille (4) pour recevoir l'extrémité (60) de tube, et contenant également, dans la douille (4) et radialement à l'intérieur de l'élément de maintien (6), un corps de soutien (34) avec une surface extérieure d'appui (50) sur laquelle s'appuient les griffes de maintien (12) réalisées élastiques et qui est placée selon un angle (52) prédéterminé s'ouvrant en direction de l'extrémité antérieure libre (14) de la douille,
***caractérisé en ce que*** la partie annulaire fermée (44) de l'élément de maintien (6) est intégrée de manière inamovible dans la zone de jonction entre une partie antérieure (30) de douille et une partie postérieure (32) de douille, qui sont reliées fixement et durablement l'une à l'autre, et est fixée de façon mobile ni axialement ni radialement,
***en ce que*** la surface intérieure (26) de la partie antérieure (30) de douille, qui comprend le corps de soutien (34) en tant que partie intégrale, est conformée pour soutenir l'extrémité (14) de tube,
***et en ce que*** la partie postérieure (32) de douille comprend une partie de surface intérieure (48) qui est placée à distance de la surface extérieure d'appui (50) du corps de soutien (34) en formant un interstice (56), les griffes de maintien (12) étant mobiles dans l'interstice (56).

2. Accouplement à fiche selon la revendication 1, ***caractérisé en ce que*** la partie annulaire fermée (44) de l'élément de maintien (6) est placée pour l'essentiel dans un plan orthogonal à l'axe longitudinal (24) de l'accouplement à fiche et ***en ce que*** les griffes de maintien (12) sont disposées en coude au niveau d'un coude (66) de l'élément de maintien (6), en direction de l'intérieur de l'accouplement à fiche.

3. Accouplement à fiche selon la revendication 1 ou 2, ***caractérisé en ce que*** les deux parties (30, 32) de douille) sont reliées entre elles par venue de matière, en particulier au moyen d'une liaison soudée, et ***en ce que*** la douille (4) est un composant unitaire.

4. Accouplement à fiche selon l'une quelconque des revendications 1 à 3, ***caractérisé en ce que*** le corps de soutien (34) est conformé en collerette annulaire, dont la surface extérieure d'appui (50) est de forme essentiellement conique.

5. Accouplement à fiche selon l'une quelconque des revendications 1 à 4, ***caractérisé en ce que*** les griffes de maintien (12) de l'élément de maintien (6) sont réalisées en forme de pelle et/ou bombées par rapport à l'axe longitudinal (24) et/ou ***en ce que**,* dans la direction circonférentielle, il est prévu entre les griffes de maintien (12) voisines à chaque fois un évidement (68) dans lequel débouche une traversée (70) située à l'intérieur radialement, qui est nettement plus petite dans la direction circonférentielle que l'évidement (68) associé.

6. Accouplement à fiche selon l'une quelconque des revendications 1 à 5, ***caractérisé en ce que*** les griffes de maintien (12) comprennent une partie centrale (74) à la suite radialement de la partie annulaire et, plus loin radialement vers l'intérieur en direction des bords (38) des griffes, de manière avantageuse des deux côtés, sont munies d'élargissements (72).

7. Accouplement à fiche selon la revendication 6, ***caractérisé en ce* qu'**entre des parties centrales (74) voisines se trouvent les évidements (68), et la traversée (70) est prévue dans la direction circonférentielle entre les élargissements (72) d'éléments de maintien voisins (6), la traversée (70) étant réalisée nettement plus petite que l'évidement associé (68) dans la direction circonférentielle.

8. Accouplement à fiche selon l'une quelconque des revendications 1 à 7, ***caractérisé en ce* qu'**une section antérieure (92) de l'élément d'étanchéité (8) la plus proche de l'extrémité libre (18) du corps de base (2), élément d'étanchéité qui est placé de préférence dans une rainure annulaire (86) du corps de base (2), est reliée au corps de base (2) au moyen d'une liaison collée (94), tandis qu'une section postérieure (96) de l'élément d'étanchéité (8) est placée mobile par rapport au corps de base (2) et en particulier à sa rainure annulaire (86), pour l'essentiel dans la direction de l'axe longitudinal (24).

9. Accouplement à fiche selon l'une quelconque des revendications 1 à 8, ***caractérisé en ce qu*'**entre la surface extérieure d'appui (50) du corps de soutien (34) et la partie de surface intérieure (48) de la partie de douille postérieure (32) distante de la première vers l'extérieur radialement, il est prévu l'interstice (56) dans lequel les griffes de maintien (12) peuvent être déplacées et écartées lors de l'enfoncement de l'extrémité (60) de tube.
